# FASCICULE DE BREVET EUROPEEN

(11) **EP 2 629 929 B1**
(45) Date de publication et mention de la délivrance du brevet: **08.04.2015**
(21) Numéro de dépôt: 11785719.3
(22) Date de dépôt: 14.10.2011
(51) Int. Cl.: B23Q 3/06, B23Q 3/08, B25B 5/14, F01D 25/28

(54) **OUTILLAGE D'ENROBAGE DE LA PALE D'UNE AUBE DE TURBINE POUR L'USINAGE DU PIED COMPORTANT UN BERCEAU MOBILE EN ROTATION**
VORRICHTUNG MIT EINER DREHMULDE ZUM UMSCHLIESSEN DER SCHAUFEL EINER TURBINENSCHAUFEL ZUR BEARBEITUNG DES SCHAUFELFUSSES
EQUIPMENT COMPRISING A ROTATABLE CRADLE AND INTENDED FOR ENCASING THE AIRFOIL OF A TURBINE BLADE IN ORDER TO MACHINE THE ROOT

(30) Priorité: 19.10.2010 FR 1058506
(43) Date de publication de la demande: 28.08.2013
(73) Titulaire: Snecma, 75015 Paris (FR)
(72) Inventeur: CHACON, José, F-92390 Villeneuve La Garenne (FR); ROUSSEL, Jean-Jacques Michel, F-95450 Fremainville (FR)
(74) Mandataire: Gevers France
(86) Numéro de dépôt international: PCT/FR2011/052411
(87) Numéro de publication internationale: WO 2012/052666

(56) Documents cités:
- DE-A1- 3 727 312
- DE-A1- 4 124 340
- US-A- 2 540 774
- US-A- 4 822 013
- DATABASE WPI Week 197924 Thomson Scientific, London, GB; AN 1979-F2491B XP002630346, -& SU 619 321 A (SKVORTSOV N I) 4 juillet 1978 (1978-07-04)
- DATABASE WPI Week 197816 Thomson Scientific, London, GB; AN 1978-D2225A XP002630347, -& SU 553 083 A (METAL WKG IND INTER) 4 mai 1977 (1977-05-04)

## Description

Le domaine de la présente invention est celui de l'aéronautique et, plus particulièrement celui de la fabrication des aubes de turbine pour les turbomachines.

Les aubes des turbomachines sont généralement constituées de trois parties, une partie supérieure, ou talon, une partie centrale, ou pale, et une partie inférieure, ou pied, les parties supérieure et inférieure étant séparées de la pale par une plateforme. La pale est destinée à être positionnée dans la veine gazeuse pour prélever du travail, par une détente des gaz de la veine, ce qui permet d'entraîner le rotor de la turbomachine. Un élément essentiel dans la fabrication d'une aube est le respect de l'orientation relative de la pale par rapport au pied car, le pied étant rattaché à un disque, et étant donc fixe par rapport au rotor de la turbomachine, cette orientation détermine la position de la pale dans le flux des gaz et par suite son efficacité aérodynamique.

La fabrication d'une aube commence, en général, par la réalisation, par fonderie, d'une pièce brute, qui est aux cotes finies en ce qui concerne la pale et qui n'est qu'une ébauche pour le pied et le talon. Il est ensuite nécessaire de tailler le pied et le talon pour leur donner leur forme finale. En particulier la taille du pied a une grande importance car c'est elle qui conditionne la bonne orientation de la pale par rapport à la veine d'air. Il importe de réaliser cette opération de taille du pied sans que s'accroissent les incertitudes sur le positionnement de la pale par rapport au pied, notamment en évitant d'ajouter aux tolérances liées à la fabrication de la pale, des tolérances d'usinage trop importantes.

L'usinage du pied s'effectue traditionnellement en positionnant l'aube dans un référentiel connu, lié à la machine-outil, et matérialisé par six points d'appui formant des butées, contre lesquels l'aube doit venir s'appuyer. On définit généralement, à partir de ces six points, un plan de référence, orienté parallèlement à la direction du bord d'attaque de l'aube, qui identifie l'orientation qu'a la pale de l'aube par rapport à une face de son pied qui a vocation à venir en contact avec l'alvéole du disque sur lequel elle sera montée. L'efficacité aérodynamique optimale de la pale est obtenue si l'usinage de son pied aboutit à ce que ce plan de référence de l'aube coïncide avec un plan idéal d'orientation de l'aube, défini lui aussi par rapport à la même face du pied.

Les points de l'aube en contact avec ces butées sont, pour certains, matérialisés par un repère sur la surface extérieure de l'aube, qui est généré lors du forgeage ou de la fonderie. L'étape suivante, qui est l'étape essentielle pour réussir le positionnement correct du pied par rapport à la pale, consiste à brider l'aube pour qu'elle ne bouge pas au cours de l'usinage du pied et que les flancs du bulbe ou du sapin du pied soient correctement orientés. Une des difficultés associées à cette opération réside dans la forme tridimensionnelle de la pale qui ne présente pas de surface plane sur laquelle faire porter un appui parfaitement étayé.

Une technique connue consiste à brider mécaniquement la pale dans un référentiel matérialisé par six points liés à la machine-outil, en appuyant une pièce de serrage contre elle. Après avoir donné à la pale la bonne orientation, c'est-à-dire l'avoir fait tourner d'un angle dit de présélection, qui lui donnera le bon angle d'incidence dans le flux des gaz de la turbomachine, on commence par usiner une face du pied qui servira de référence spatiale pour la suite des opérations. Les opérations suivantes d'usinage de la forme du pied puis de celle du talon s'effectuent alors en positionnant la face usinée du pied contre un référentiel approprié qui est défini sur la machine d'usinage.

Cette technique ne garantit, tout d'abord, pas une stabilité parfaite lors de l'usinage de la face du pied formant référence spatiale car l'appui, qui est généralement pratiqué sur le centre de l'extrados de la pale, est limité du fait qu'il ne s'exerce que dans une seule direction. La pression applicable est en outre limitée par la résistance de la pale et par celle du voile constituant l'épaisseur de cet extrados. A défaut d'un appui suffisant, la pale peut se déplacer lors de l'usinage ; a contrario un appui trop important se traduirait par un marquage de la surface de l'extrados, associé éventuellement à une déformation du profil de cet extrados dont l'épaisseur est relativement mince. Ensuite cette technique cumule les incertitudes sur le positionnement des éléments à usiner puisqu'on utilise tout d'abord un référentiel lié à la pale lors du placement de celle-ci sur la machine d'usinage, puis l'usinage du pied se pratique dans un référentiel lié à la machine d'usinage, et enfin l'usinage du talon s'effectue dans un référentiel lié à une face du pied.

Une autre technique, couramment employée, consiste à noyer la pale, ou tout au moins une partie conséquente de celle-ci, dans un bloc d'enrobage réalisé en un matériau à bas point de fusion, tel qu'un alliage d'étain et de bismuth. On usine tout d'abord une face du pied de la pale. Cette face sert ensuite de référence spatiale pour le positionnement de l'aube dans un référentiel de six points. Puis la pale est noyée dans le bloc d'enrobage en matériau à bas point de fusion. De cette façon la question du positionnement précis de la pale est reportée sur le positionnement du bloc d'enrobage qui présente, par construction, des surfaces planes qui formeront des plans de référence pour les usinages ultérieurs. Après l'usinage du pied et du talon, le bloc est éliminé par fusion et l'aube retrouve sa forme extérieure normale. Cette méthode comporte toutefois, là encore, l'inconvénient d'augmenter les incertitudes de positionnement du pied en ajoutant aux tolérances de fabrication de la pale, celles issues du positionnement du bloc autour d'elle.

Un outillage et un procédé pour l'enrobage de la pale d'une aube de turbo machine sont décrits dans le document US 2 540 774.

La présente invention a pour but de remédier à ces inconvénients en proposant une méthode de définition d'un référentiel de positionnement spatial d'une aube pour l'usinage de son pied qui ne présente pas les inconvénients de l'art antérieur et, en particulier, qui élimine les incertitudes dues aux transferts des plans de référence utilisés lors de l'usinage de ses extrémités. Elle a également pour but de proposer un outillage permettant la réalisation de l'usinage du pied d'une aube de turbine mettant en oeuvre cette méthode.

A cet effet, l'invention a pour objet un outillage pour l'enrobage de la pale d'une aube de turbomachine dans un bloc d'enrobage, comportant un socle sur lequel est positionné un bloc moule pour la coulée du métal d'enrobage autour de ladite pale, ledit bloc moule comportant une empreinte définissant un plan de référence sur le bloc formant support pour le positionnement du bloc dans l'espace, ledit socle portant en outre un berceau de maintien de l'aube par l'intermédiaire de six points d'appui formant un référentiel pour le positionnement de ladite aube dans l'espace et définissant un plan dit d'orientation, représentatif de la position angulaire de la pale par rapport au pied de l'aube, lesdits plans de référence et d'orientation étant orientés sensiblement parallèlement à la direction du bord d'attaque de l'aube lorsque celle-ci est positionnée contre lesdits six points d'appui, caractériséen ce que le berceau est mobile en rotation par rapport audit socle autour d'un axe orienté sensiblement parallèlement à la direction du bord d'attaque de l'aube, de façon à permettre une modification de l'angle formé entre lesdits plans de référence et d'orientation.

On obtient ainsi une meilleure précision dans le positionnement de la pale de l'aube dans le flux des gaz de la turbomachine, car l'outillage permet de ne faire qu'un seul transfert de référentiel pour le positionnement de la pale dans l'espace, celui-ci se faisant directement des six points de l'aube vers un plan du bloc d'enrobage. Par la suite, l'usinage du pied et du talon s'effectue, pour toutes les aubes, à partir d'un même plan de référence, qui est celui situé sur le bloc d'enrobage.

Dans un mode particulier de réalisation le berceau est formé de deux éléments positionnés de part et d'autre du bloc moule et reliés rigidement l'un à l'autre par un moyen de liaison.

De façon plus préférentielle les points d'appui sont répartis sur les deux éléments.

Les moyens de tenue de l'aube sont ainsi répartis de façon plus éloignés les uns les autres, ce qui représente un avantage pour un maintien plus stable de l'aube.

Avantageusement les empreintes du bloc moule définissent deux plans orientés sensiblement parallèlement à la direction que prend l'une des faces latérales de la plateforme du pied de l'aube en position sur ledit outillage, l'un comme l'autre pouvant servir de plan de référence.

Avec une telle configuration on facilite les opérations d'usinage à venir. On a, par ailleurs, un volume du bloc d'enrobage plus réduit ; cet encombrement plus faible donne plus de flexibilité pour l'installation des outillages d'usinage du pied et du talon et, fournit de ce fait, la possibilité d'effectuer les deux opérations simultanément.

Préférentiellement l'outillage comporte un moyen pour le réglage de l'angle de rotation du berceau dont la plage d'efficacité est de plus ou moins 2°.

L'invention revendique également un procédé d'enrobage d'une aube de turbomachine, à l'aide d'un métal à bas point de fusion pour le maintien de ladite aube au cours de l'usinage de son pied et/ou de son talon, la pale de ladite aube étant aux cotes finies, ledit pied étant à l'état d'ébauche et comportant une face, orientée sensiblement parallèlement à la direction du bord d'attaque de l'aube, formant référence spatiale pour le positionnement en rotation de la pale dans l'espace, ledit procédé comportant une étape de mesure de l'angle de présélection que fait un plan dit d'orientation représentatif du positionnement en rotation de la pale dans l'espace avec le plan idéal d'orientation de ladite pale défini comme donnant l'orientation optimale pour la pale dans la veine de gaz de la turbomachine, les deux plans étant orientés sensiblement parallèlement à la direction du bord d'attaque de l'aube et leurs orientations étant définies angulairement en relation avec la face dudit pied formant référence spatiale, ledit procédé comportant en outre une étape de coulée dudit métal à bas point de fusion autour de ladite pale dans un bloc moule pour former un bloc d'enrobage. Il est caractérisé en ce qu'il comporte, préalablement à la coulée du métal à bas point de fusion, une étape de rotation de ladite pale par rapport au bloc moule d'un angle égal à l'angle de présélection mesuré.

Cette rotation permet, grâce à la position relative donnée aux parois du bloc par rapport à la pale, d'orienter celle-ci directement dans la bonne position pour l'usinage des facettes de son pied, et accessoirement de son talon.

L'invention revendique enfin un procédé de réalisation d'une aube de turbine comportant une étape d'enrobage de sa pale à l'aide du procédé décrit ci-dessus.

Avantageusement le procédé précédent prévoit que les usinages du pied et du talon sont réalisés simultanément sur une même machine d'usinage, l'aube étant maintenue sur ladite machine par l'intermédiaire du bloc d'enrobage.

On obtient ainsi un gain de temps appréciable pour la production des aubes de turbine, sans perte de qualité sur l'orientation des pales par rapport à leur position idéale dans la veine des gaz de la turbomachine.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en perspective d'une aube de turbine de turbomachine issue brute de fonderie, avant l'usinage de son pied et de son talon ;
- la figure 2 est une vue en perspective d'une aube de turbine noyée dans un bloc d'enrobage ;
- la figure 3 est une vue de dessous de l'aube de turbine enrobée de la figure 2 ;
- la figure 4 est une vue en perspective d'une partie d'un outillage d'enrobage d'une aube de turbine, selon un mode de réalisation de l'invention ;
- la figure 5 est une vue de détail de la figure 4, montrant un élément particulier de l'outillage d'enrobage, et
- la figure 6 est une deuxième représentation en perspective de la partie de l'outillage d'enrobage de la figure 4.

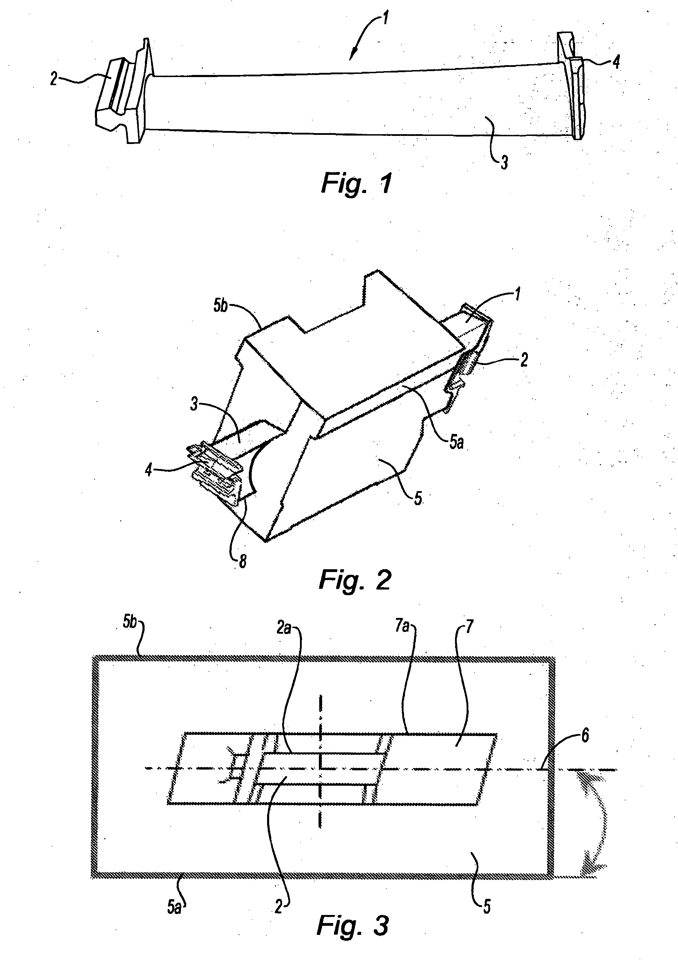

En se référant à la figure 1, on voit une aube de turbine 1 composée, du bas vers le haut (c'est à dire de la gauche vers la droite sur la figure), d'un pied 2, d'une pale 3 et d'un talon 4. L'aube 1 est issue de fonderie, avec sa pale 3 aux cotes finies, c'est-à-dire qui ne nécessite pas de retouche, alors que le pied 2 et le talon 4 sont à l'état d'ébauches, qu'il faudra usiner pour leur donner leur forme définitive. En particulier l'orientation précise du pied par rapport à la pale devra être définie au cours de cet usinage, à l'aide d'une rotation, par rapport à un flanc actuel du pied, d'un angle de présélection pouvant varier entre +/- 2°, dans le but d'obtenir le meilleur rendement aérodynamique possible pour l'aube. Le talon sera usiné ensuite pour faire apparaître, classiquement, des léchettes d'étanchéité.

La figure 2 montre une aube 1 emprisonnée dans un bloc d'enrobage 5, avec la majeure partie de sa pale 3 noyée dans le métal à bas point de fusion, alors que le pied 2 et le talon 4 sont libres et peuvent être façonnés par une machine-outil. Le bloc d'enrobage 5 comporte des plans parallèles 5a, 5b qui s'étendent sensiblement parallèlement au bord d'attaque 8 et qui sont orientés angulairement de façon précise, en référence à l'orientation de la pale, de façon à servir de plan de référence pour le positionnement de la pale dans l'espace, lors de son installation sur une machine-outil.

La figure 3 montre, de même, l'aube 1, en vue de dessous, noyée dans le bloc 5, avec son pied 2 et la plateforme 7 qui délimite celui-ci. Le bloc 5 est, ici, représenté sous la forme d'un parallélépipède rectangle avec deux faces parallèles 5a et 5b dont l'une, au moins, servira de plan de référence lors de l'usinage des extrémités de l'aube. Ces deux faces sont positionnées de façon sensiblement parallèle à deux des faces latérales de la plateforme 7 du pied d'aube.

Parallèlement la pale 3 présente un plan dit d'orientation 6, orienté parallèlement à la direction du bord d'attaque 8 de l'aube, qui correspond, ici, sensiblement à la surface médiane de la pale, et qui est défini de façon précise en relation avec les six points de référence de l'aube qui définissent la position de sa pale dans l'espace. L'orientation de ce plan 6 par rapport à un flanc 2a du pied 2 ou d'une face latérale 7a de sa plateforme 7, qui est ainsi pris comme la face du pied formant référence spatiale à partir de laquelle est défini le positionnement en rotation de l'aube dans l'espace, conditionne l'angle d'incidence qu'aura la pale de l'aube avec la veine de gaz lorsque celle-ci sera installée sur la turbomachine. Comme indiqué précédemment, l'efficacité aérodynamique optimale de la pale est obtenue si l'usinage de son pied aboutit à ce que ce plan d'orientation de la pale coïncide avec un plan idéal d'orientation de la pale. Ce plan idéal, défini lui aussi par rapport à une face de la plateforme 7 ou d'un flanc du pied 2 de l'aube, est fourni par le bureau de calcul de la société. La maîtrise de l'angle que fait le plan des faces 5a ou 5b du bloc d'enrobage 5 avec le plan d'orientation 6 de la pale, est l'objet même de l'invention. Il est représenté égal à zéro sur la figure 3.

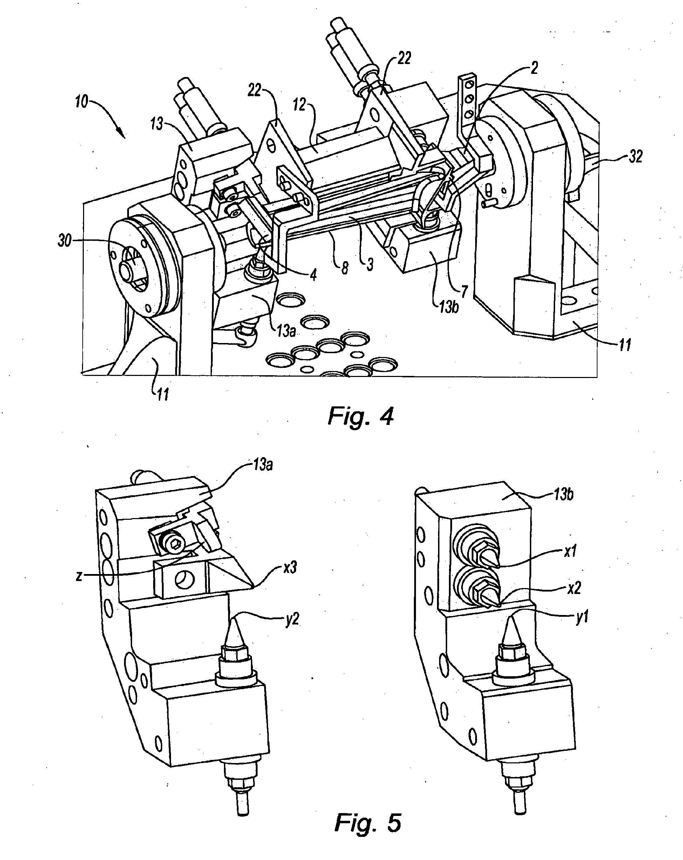

En se référant maintenant à la figure 4 on voit les éléments principaux d'un outillage 10 servant à la coulée du bloc d'enrobage 5 sur la pale 3 de l'aube 1. Cet outillage 10 est essentiellement composée de trois parties, un socle 11 fixé au sol, un bloc moule 12, fixe lui aussi et porté rigidement par le socle 11, et un berceau 13 porté par le socle 11 et mobile en rotation, par rapport à ce socle 11 et au bloc moule 12, autour d'un axe horizontal 30. L'outillage 10 porte, ici, une aube 1 qu'on voit en position dans le berceau 13. Cette aube est disposée avec son bord d'attaque 8 dans une position sensiblement horizontale, parallèle à l'axe 30.

Le bloc moule 12 est positionné entre deux éléments 13a et 13b du berceau qui l'enserrent et qui sont reliés l'un à l'autre par un moyen rigide de liaison, situé à l'arrière-plan de l'outillage 10. Il s'agit d'un moule classique pour la coulée d'un métal à bas point de fusion autour d'une pale, avec, en premier lieu, une empreinte destinée à générer les faces parallèles 5a et 5b du bloc 5 avec une grande précision quant à leur orientation, et, en second lieu, un orifice d'attaque de la coulée positionné à sa partie supérieure (non représenté) et deux plaques 22, positionnées de part et d'autre du bloc moule, entre le bloc moule 12 et les deux éléments du berceau mobile 13, de façon à contenir le métal liquide lors de la coulée et à former des limites à l'extension du bloc 5 le long de la pale 3. Le bloc moule n'est, ici, représenté qu'en partie, une partie complémentaire venant sur le devant de la pale 2 de l'aube pour l'enrober entièrement lors de la coulée.

Le berceau 13 est mobile en rotation autour de l'axe horizontal 30, qui est porté par deux paliers tenus par le socle 11. Le réglage en rotation du berceau 13 est assuré par un moyen de réglage 32 qui permet de connaître et de régler la position angulaire du berceau par rapport au socle 11, et, par suite, par rapport au bloc moule 12. C'est grâce à lui que l'on met en place l'angle de présélection, c'est-à-dire, de façon concrète, l'écart angulaire que l'on souhaite faire apparaître entre le plan de d'orientation 6 et les plans des faces 5a et 5b du bloc d'enrobage.

La figure 5 montre le berceau mobile 13, seul, sans son aube 1. Il comporte six points d'appui pour le maintien d'une aube au niveau des six points de référence de celle-ci pour son positionnement dans l'espace. Cinq points d'appui X1, X2, X3, Y1 et Y2 définissent précisément la position spatiale que doit avoir la pale 2 lors de la coulée du métal à bas point de fusion et, en particulier, l'orientation de son plan d'orientation 6 dans la rotation autour de l'axe 30. Un sixième point Z définit la position longitudinale de la pale le long de l'axe 30 par une coopération avec le talon 4 de l'aube ; une incertitude sur le positionnement de la pale le long de cet axe n'a pas de conséquence négative, celle-ci se traduisant in fine par un simple décalage longitudinal du bloc 5 sur la pale 3.

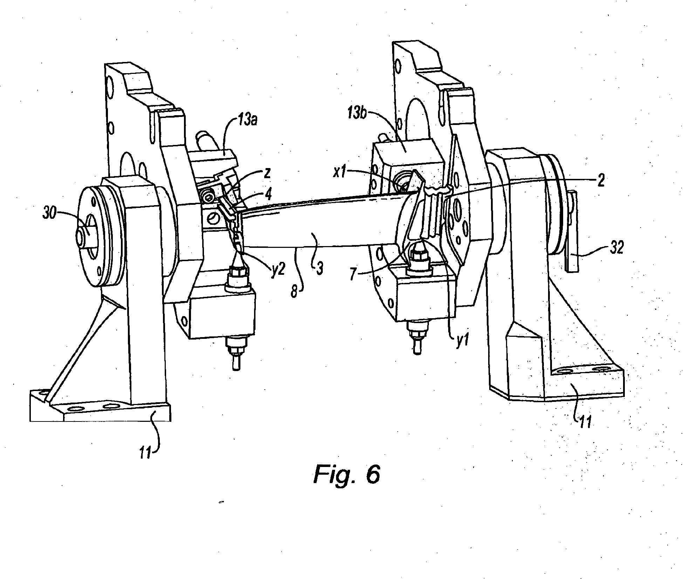

La figure 6 montre l'outillage de la figure 4, en version allégée, de façon à ce qu'apparaisse le positionnement de l'aube 1, avec quatre points d'appui en position contre quatre des six points de référence pour le positionnement de l'aube dans l'espace, les deux derniers n'étant pas visibles.

On va maintenant décrire le processus de montage puis d'enrobage d'une aube 1 par un bloc 5 sur un outillage de coulée 10 conforme à un mode de réalisation de l'invention.

L'aube 1 issue de fonderie est analysée lors de son contrôle qualité après l'opération de fonderie, au cours duquel est effectué un contrôle de son orientation par rapport, par exemple, à une face latérale de la plateforme 7 telle qu'elle est issue de fonderie. La mesure angulaire effectuée permet de définir de quel angle doit être décalé le pied 2 en jouant sur l'orientation de ses flancs ou des faces latérales de la plateforme 7 lors de son usinage, pour que la pale 3 soit correctement orientée dans la veine de gaz de la turbomachine. L'angle de présélection est égal à l'angle que fait le plan d'orientation 6 avec le plan idéal d'orientation de la pale dans l'espace, c'est-à-dire celui qui donnerait une orientation optimale de celle-ci dans le flux de gaz. Cet angle de présélection est alors mesuré, comme dans l'art antérieur, en comparant l'orientation d'une des faces latérales 7a de la plateforme 7 ou d'un flanc 2a du pied 2 de l'aube, avec l'orientation idéale qui est définie en liaison avec les six points de référence de l'aube pour son positionnement dans l'espace.

Cet angle étant connu, l'aube est positionnée dans le berceau 13 en alignant ses six points de référence de positionnement contre les six points d'appui X1, X2, X3, Y1, Y2 et Z du berceau 13. En utilisant le moyen de réglage 32, l'opérateur fait tourner le berceau 13 sur son axe 30, par rapport au socle 11 d'un angle égal à l'angle de présélection mesuré précédemment, et cela dans un sens qui corrige le décalage angulaire observé.

L'opérateur fait alors couler du métal à bas point de fusion, en phase liquide, dans le bloc moule 12, par l'intermédiaire de l'orifice d'attaque de coulée. Le métal se répand autour de la pale 3 de l'aube, dans la limite permise par les empreintes interne du moule et par les deux plaques latérales 22. Après solidification du bloc d'enrobage 5, l'aube enrobée est retirée de l'outillage 10 et est prête à être installée sur une machine-outil pour l'usinage de son pied 2 et de son talon 4. L'angle de présélection ayant été corrigé par la rotation imposée à la pale avant l'enrobage, les faces 5a et 5b du bloc sont correctement orientées par rapport au plan d'orientation 6 de la pale ; elles pourront alors servir de référence de positionnement pour la pale et donc de référence pour le positionnement du bloc dans la machine-outil.

Il n'y a plus besoin d'effectuer un report de la référence de la pale 3 sur une des faces latérales de la plateforme 7 pour positionner l'aube avant usinage de son pied 2, ni d'attendre l'usinage du pied pour servir de référence pour l'usinage du talon 4. Il est ainsi possible d'effectuer simultanément l'usinage de ces deux extrémités en plaçant l'aube enrobée dans une machine-outil comportant, par exemple, une double meule.

La position de la pale de l'aube étant ainsi correctement définie dès la coulée du bloc (5), il n'y a plus besoin de changer les réglages des machines d'usinage en passant d'une aube à la suivante, pour autant qu'on effectue l'usinage des pieds d'un même type d'aube.

On obtient ainsi un gain appréciable de temps dans la réalisation d'une aube de turbine ainsi qu'une meilleure qualité de positionnement du fait de la réduction du nombre des transferts successifs de référentiels.

## Revendications

1. Outillage pour l'enrobage de la pale (3) d'une aube (1) de turbomachine dans un bloc d'enrobage (5), comportant un socle (11) sur lequel est positionné un bloc moule (12) pour la coulée d'un matériau d'enrobage autour de ladite pale (3), ledit bloc moule comportant une empreinte définissant un plan de référence (5a, 5b) sur le bloc (5) formant support pour le positionnement du bloc (5) dans l'espace, ledit socle (11) portant en outre un moyen de maintien (13) de l'aube (1) par l'intermédiaire de six points d'appui (X1, X2, X3, Y1, Y2, Z) formant un référentiel pour le positionnement de ladite aube dans l'espace et définissant un plan dit d'orientation (6) représentatif de la position angulaire de la pale (3) par rapport au pied (2) de l'aube (1), lesdits plans de référence (5a, 5b) et d'orientation (6) étant orientés sensiblement parallèlement à la direction du bord d'attaque (8) de l'aube (1) lorsque celle-ci est positionnée contre lesdits six points d'appui,
**caractérisé en ce que** le moyen de maintien (13) est mobile en rotation par rapport audit socle (11) autour d'un axe (30) orienté sensiblement parallèlement à la direction du bord d'attaque de l'aube (1), de façon à permettre une modification de l'angle formé entre lesdits plans de référence et d'orientation.

2. Outillage selon la revendication 1 dans laquelle le moyen de maintien (13) est formé de deux éléments (13a, 13b) positionnés de part et d'autre du bloc moule (12) et reliés rigidement l'un à l'autre par un moyen de liaison.

3. Outillage selon la revendication 2 dans laquelle les points d'appui sont répartis sur les deux éléments (13a, 13b).

4. Outillage selon l'une des revendications 1 à 3 dans laquelle les empreintes du bloc moule (12) définissent deux plans (5a, 5b) orientés sensiblement parallèlement à la direction que prend l'une des faces latérales (7a) de la plateforme (7) du pied de l'aube (1) en position sur ledit outillage, l'un comme l'autre pouvant servir de premier plan de référence.

5. Outillage selon l'une des revendications 1 à 4 comportant un moyen (32) pour le réglage de l'angle de rotation du moyen de maintien (13) dont la plage d'efficacité est de plus ou moins 2°.

6. Procédé d'enrobage d'une aube de turbomachine (1), à l'aide d'un matériau fusible pour le maintien de ladite aube (1) au cours de l'usinage de son pied (2) et/ou de son talon (4), la pale (3) de ladite aube étant aux cotes finies, ledit pied (2) comportant une face (2a), orientée sensiblement parallèlement à la direction du bord d'attaque (8) de l'aube, formant référence spatiale pour le positionnement en rotation de la pale dans l'espace, ledit procédé comportant une étape de mesure de l'angle de présélection que fait un plan dit d'orientation (6) représentatif du positionnement en rotation de la pale (3) dans l'espace avec le plan idéal d'orientation de ladite pale défini comme donnant l'orientation optimale pour la pale (3) dans la veine de gaz de la turbomachine, les deux plans d'orientation étant orientés sensiblement parallèlement à la direction du bord d'attaque (8) de l'aube et leurs orientations étant définies en relation avec la face dudit pied formant référence spatiale, ledit procédé comportant en outre une étape de coulée dudit matériau fusible autour de ladite pale dans un bloc moule (12) pour former un bloc d'enrobage (5), **caractérisé en ce qu'**il comporte, préalablement à la coulée du matériau, une étape de rotation de ladite pale (3) par rapport au bloc moule (12) d'un angle égal à l'angle de présélection mesuré.

7. Procédé de réalisation d'une aube de turbine comportant une étape d'enrobage de sa pale (3) à l'aide du procédé selon la revendication 6.

8. Procédé selon la revendication 7 dans lequel les usinages du pied (2) et du talon (4) sont réalisés simultanément sur une même machine d'usinage, l'aube (1) étant maintenue sur ladite machine par l'intermédiaire du bloc d'enrobage (5).

## Patentansprüche

1. Werkzeugeinrichtung für die Ummantelung des Schaufelblattes (3) einer Schaufel (1) einer Turbomaschine in einem Ummantelungsblock (5), welche einen Sockel (11) aufweist, auf welchem ein Gießformblock (12) zum Gießen eines Ummantelungsmaterials um das Schaufelblatt (3) herum positioniert ist, wobei der Gießformblock einen Formhohlraum aufweist, der eine Bezugsebene (5a, 5b) an dem Block (5) definiert, die eine Abstützung für die Positionierung des Blocks (5) im Raum bildet, wobei der Sockel (11) außerdem ein Haltemittel (13) zum Halten der Schaufel (1) über sechs Abstützungspunkte (X1, X2, X3, Y1, Y2, Z) trägt, die ein Bezugssystem für die Positionierung der Schaufel im Raum bilden und eine sogenannte Ausrichtungsebene (6) definieren, die für die Winkelposition des Schaufelblattes (3) bezüglich des Fußes (2) der Schaufel (1) repräsentativ ist, wobei die Bezugsebene (5a, 5b) und die Ausrichtungsebene (6) im Wesentlichen parallel zur Richtung der Eintrittskante (8) der Schaufel (1) ausgerichtet sind, wenn diese an den sechs Abstützungspunkten anliegend positioniert ist,
**dadurch gekennzeichnet, dass** das Haltemittel (13) bezüglich des Sockels (11) drehbeweglich um eine Achse (30) ist, die im Wesentlichen parallel zur Richtung der Eintrittskante der Schaufel (1) ausgerichtet ist, um eine Änderung des Winkels zu ermöglichen, der zwischen der Bezugs- und der Ausrichtungsebene gebildet wird.

2. Werkzeugeinrichtung nach Anspruch 1, wobei das Haltemittel (13) von zwei Elementen (13a, 13b) gebildet wird, die beiderseits des Gießformblocks (12) positioniert und durch ein Verbindungsmittel starr miteinander verbunden sind.

3. Werkzeugeinrichtung nach Anspruch 2, wobei die Abstützungspunkte auf die zwei Elemente (13a, 13b) verteilt sind.

4. Werkzeugeinrichtung nach einem der Ansprüche 1 bis 3, wobei die Formhohlräume des Gießformblocks (12) zwei Ebene (5a, 5b) definieren, die im Wesentlichen parallel zu der Richtung ausgerichtet sind, welche eine der Seitenflächen (7a) der Plattform (7) des Fußes der Schaufel (1) in der Position auf der Werkzeugeinrichtung einnimmt, wobei sowohl die eine als auch die andere als erste Bezugsebene dienen kann.

5. Werkzeugeinrichtung nach einem der Ansprüche 1 bis 4, welche ein Mittel (32) zur Einstellung des Drehwinkels des Haltemittels (13) aufweist, dessen Wirkungsbereich ungefähr 2° beträgt.

6. Verfahren zur Ummantelung einer Schaufel (1) einer Turbomaschine mithilfe eines schmelzbaren Materials zum Halten der Schaufel (1) während der Bearbeitung ihres Fußes (2) und/oder ihres Kopfes (4), wobei das Schaufelblatt (3) der Schaufel die Fertigmaße aufweist, wobei der Fuß (2) eine Fläche (2a) aufweist, die im Wesentlichen parallel zur Richtung der Eintrittskante (8) der Schaufel ausgerichtet ist, wobei sie ein räumliches Bezugselement für die Drehpositionierung des Schaufelblatts im Raum bildet, wobei das Verfahren einen Schritt der Messung des Vorwahlwinkels aufweist, welchen eine sogenannte Ausrichtungsebene (6), die für die Drehpositionierung des Schaufelblatts (3) im Raum repräsentativ ist, mit der idealen Ausrichtungsebene des Schaufelblatts bildet, die als die optimale Ausrichtung für das Schaufelblatt (3) in dem Gasstrom der Turbomaschine angebend definiert ist, wobei die zwei Ausrichtungsebenen im Wesentlichen parallel zur Richtung der Eintrittskante (8) der Schaufel ausgerichtet sind und ihre Ausrichtungen in Bezug auf die ein räumliches Bezugselement bildende Fläche des Fußes definiert sind, wobei das Verfahren außerdem einen Schritt des Gießens des schmelzbaren Materials um das Schaufelblatt herum in einem Gießformblock (12), um einen Ummantelungsblock (5) zu bilden, aufweist,
**dadurch gekennzeichnet, dass** es vor dem Gießen des Materials einen Schritt der Drehung des Schaufelblatts (3) bezüglich des Gießformblocks (12) um einen Winkel, der gleich dem gemessenen Vorwahlwinkel ist, aufweist.

7. Verfahren zur Herstellung einer Turbinenschaufel, welches einen Schritt der Ummantelung ihres Schaufelblatts (3) mithilfe des Verfahrens nach Anspruch 6 aufweist.

8. Verfahren nach Anspruch 7, wobei die Bearbeitungen des Fußes (2) und des Kopfes (4) gleichzeitig auf ein und derselben Bearbeitungsmaschine durchgeführt werden, wobei die Schaufel (1) über den Ummantelungsblock (5) auf der Maschine gehalten wird.

## Claims

1. Equipment for encasing the airfoil (3) of a turbomachine blade (1) in an encasing block (5), comprising a base (11) on which a molding block (12) is positioned for casting an encasing material around said airfoil (3), said molding block comprising an imprint which defines a reference plane (5a, 5b) on the block (5) acting as a support for positioning the block (5) in space, said base (11) further carrying a means (13) for holding the blade (1) by means of six contact points (X1, X2, X3, Y1, Y2, Z) forming a reference frame for positioning said blade in space and defining what is referred to as an orientation plane (6) which represents the angular position of the airfoil (3) relative to the root (2) of the blade (1), said reference planes (5a, 5b) and the orientation plane (6) being oriented substantially parallel to the direction of the leading edge (8) of the blade (1) when the latter is positioned against said six contact points,
**characterized in that** the holding means (13) is able to move in rotation relative to said base (11) about a spindle (30) oriented substantially parallel to the direction of the leading edge of the blade (1), so as to allow the angle formed between said reference and orientation planes to be changed.

2. The equipment as claimed in claim 1, in which the holding means (13) is formed of two elements (13a, 13b) positioned on either side of the molding block (12) and connected rigidly to one another by a connection means.

3. The equipment as claimed in claim 2, in which the contact points are distributed over the two elements (13a, 13b).

4. The equipment as claimed in one of claims 1 to 3, in which the imprints of the molding block (12) define two planes (5a, 5b) oriented substantially parallel to the direction taken by one of the lateral faces (7a) of the platform (7) of the root of the blade (1) in position on said equipment, each being able to serve as first reference plane.

5. The equipment as claimed in one of claims 1 to 4, comprising a means (32) for adjusting the angle of rotation of the holding means (13), the effective range of which is plus or minus 2°.

6. A method for encasing a turbomachine blade (1) using a meltable material for holding said blade (1) during machining of its root (2) and/or of its shroud (4), the airfoil (3) of said blade having its finished dimensions, said root (2) having a face (2a) oriented substantially parallel to the direction of the leading edge (8) of the blade, forming a spatial reference for the rotational position of the airfoil in space, said method comprising a step of measuring the preselection angle made by a plane referred to as an orientation plane (6) which represents the rotational position of the airfoil (3) in space, with the ideal orientation plane for said airfoil defined as giving the optimum orientation for the airfoil (3) in the flow of gases of the turbomachine, the two orientation planes being oriented substantially parallel to the direction of the leading edge (8) of the blade and their orientations being defined relative to the face of said root which acts as spatial reference, said method further comprising a step of casting said meltable material around said airfoil in a molding block (12) to form an encasing block (5),
**characterized in that** it comprises, before casting the material, a step of rotating said airfoil (3) relative to the molding block (12) through an angle equal to the measured preselection angle.

7. A method for producing a turbine blade comprising a step of encasing the airfoil (3) thereof using the method as claimed in claim 6.

8. The method as claimed in claim 7, in which the root (2) and the shroud (4) are machined simultaneously on the same machine tool, the blade (1) being held on said machine by means of the encasing block (5).
